# EUROPÄISCHE PATENTANMELDUNG

(11) **EP 3 415 871 A1**
(43) Veröffentlichungstag der Anmeldung: **19.12.2018**
(21) Anmeldenummer: 17175521.8
(22) Anmeldetag: 12.06.2017
(51) Int. Cl.: G01D 5/14

(54) **SENSORANORDNUNG ZUR ERFASSUNG VON MAGNETFELDLINIEN EINES MAGNETFELDES, BZW. ERFASSUNGSANORDNUNG, BZW. DREHWINKELMESSSYSTEM**

(71) Anmelder: Fraba B.V., 6416 SG Heerlen (NL)
(72) Erfinder: Hallermann, Florian, 52068 Aachen (DE); Kettering, Uwe, 50968 Köln (DE)
(74) Vertreter: Patentanwälte ter Smitten Eberlein-Van Hoof Rütten Partnerschaftsgesellschaft mbB

(57) **Zusammenfassung**

Sensoranordnung zur Erfassung von Magnetfeldlinien eines Magnetfeldes mit einem Sensorträger (24) mit einer ersten und einer zweiten Sensorträgerflachseite (26, 28), der zumindest ein Umlenkkörperorgan (32) für die Magnetfeldlinien und einen ersten Halbleiter-IC (38) mit Sensorelementen (42) aufweist, wobei das Umlenkkörperorgan (32) eine erste und eine zweite Umlenkkörperflachseite (34, 36) aufweist, wobei der erste Halbleiter-IC (38) an der ersten Umlenkkörperflachseite (34) vorgesehen ist, dadurch gekennzeichnet, dass an der zweiten Umlenkkörperflachseite (36) ein zweiter Halbleiter-IC (40) mit Sensorelementen (48) vorgesehen ist.

## Beschreibung

Die Erfindung betrifft eine Sensoranordnung zur Erfassung von Magnetfeldlinien eines Magnetfeldes mit einem Sensorträger mit einer ersten und einer zweiten Sensorträgerflachseite, der zumindest ein Umlenkkörperorgan für die Magnetfeldlinien und einen ersten Halbleiter-IC mit Sensorelementen aufweist, wobei das Umlenkkörperorgan eine erste und eine zweite Umlenkkörperflachseite aufweist, wobei der erste Halbleiter-IC an der ersten Umlemkkörperflachseite vorgesehen ist. Die Erfindung betrifft ebenfalls eine Erfassungsanordnung mit einer derartigen Sensoranordnung bzw. ein Drehwinkelmesssystem mit einer derartigen Erfassungsanordnung.

Eine derartige Sensoranordnung bzw. Erfassungsanordnung bzw. Drehwinkelmesssystem, ist aus der EP 2 620 752 A2 bekannt. Hierbei ist eine Leiterplatte vorgesehen, in die ein Umlenkkörper eingesetzt ist. Auf einer ersten Umlenkkörperorganflachseite des Umlenkkörperorgans, ist ein Halbleiter-IC angeordnet, der auf bekannte Weise Hallelemente aufweist. Die Leiterplatine mit dem Umlenkkörper und dem Halbleiter-IC bilden eine Sensoranordnung, die die Magnetfeldlinien eines Permanentmagneten einer sogenannten Erregeranordnung erfassen soll, um beispielsweise einen Drehwinkel einer Antriebswelle zu messen. Die als Hallelemente ausgeführten Sensorelemente sind jedoch nur auf die Richtungskomponente der Magnetfeldlinien senkrecht zu ihrer Fläche, das heißt senkrecht zur ersten oder zweiten Sensorträgerflachseite, empfindlich. Um nun eine genaue Drehwinkelmessung vorzunehmen, ist es bekannt, ein Umlenkkörperorgan dahingehend anzuordnen, dass die Magnetfeldlinien im Bereich der Hallelemente senkrecht zu den Sensorträgerflachseiten verlaufen. Hierbei kann ein Halbleiter-IC sowohl auf dem Umlenkkörperorgan als auch im Bereich des Umlenkkörperorgans auf dem Sensorträger bzw. der Platine vorgesehen sein.

Eine derartige Sensoranordnung weist jedoch den Nachteil auf, dass zwar ein Ausfall des Halbleiter-IC's dadurch detektiert werden kann, dass der Halbleiter-IC keinen Positionswert mehr ermittelt, jedoch ein fehlerhafter Betrieb, der zu einem fehlerhaften Positionswert führt, nicht erkannt werden kann.

Aufgabe der Erfindung ist es daher, eine Sensoranordnung, bzw. eine Erfassungsanordnung, bzw. ein Drehwinkelmesssystem bereit zu stellen, die bzw. das den oben genannten Nachteil auf einfache und kostengünstige Weise vermeidet.

Diese Aufgabe wird dadurch gelöst, dass an der zweiten Umlenkkörperflachseite ein zweiter Halbleiter-IC mit Sensorelementen vorgesehen ist. Hierdurch ist es möglich, das Umlenkkörperorgan für zwei Halbleiter-IC's zu nutzen, deren Signale dann auf einfache Weise miteinander verglichen werden können, um eventuelle Fehler eines Halbleiter-IC's zu detektieren, was insbesondere hinsichtlich der hohen Anforderungen bei sicherheitsrelevanten Anwendungen wichtig ist. In besonders vorteilhafter Weise sind die Sensorelemente als Hallelemente aus zu führen. Um eine Eindeutigkeit des Signals der Halbleiter-IC's zu gewährleisten, weisen in vorteilhafter Weise der erste Halbleiter-IC und/oder der zweite Halbleiter-IC mindestens zwei Hallelemente, vorzugsweise vier Hallelemente auf.

In vorteilhafter Weise, ist der Sensorträger als Leiterplatte mit elektronischen Bauteilen, wie z.B. einem Mikrocontroller, ausgeführt, wobei der Mikrocontroller Signale zumindest eines Halbleiter-IC's umrechnen und filtern kann. Hierzu ist mindestens der erste Halbleiter-IC mit dem Mikrocontroller signaltechnisch verbunden. Beispielsweise können analog Spannungen des ersten Halbleiter-IC's über einen Analog-Digital-Konverter digitalisiert werden und dann an den Mikrocontroller weitergeleitet werden. Auf diese Weise sind besonders genaue und feine Positionswerte der Antriebswelle zu ermitteln.

In einer besonders vorteilhaften Ausführungsform, weist der zweite Halbleiter-IC eine interne Signalverarbeitung auf. Dieser gibt dann direkt Positionswerte aus, die zwar keine Feinpositionswerte darstellen, die aber ausreichen, um den ersten Halbleiter-IC hinsichtlich eines fehlerfreien Betriebs zu überprüfen. Hierzu können die ungenaueren Positionswerte des zweiten Halbleiter-IC's mit den genauen Positionswerten des ersten Halbleiter-IC's verglichen werden.

Um eine optimale Umlenkung der Magnetfeldlinien zu gewährleisten, kann das Umlenkkörperorgan in vorteilhafter Weise aus einem ferro- bzw. weichmagnetischen Material, vorzugsweise einer Nickel-Eisen-Legierung (wie zum Beispiel µ-Metall) hergestellt sein.

In einer besonders vorteilhaften Ausführungsform ist das Umlenkkörperorgan in den Sensorträger eingeklebt.

Der erste und/oder der zweite Halbleiter-IC können an den Sensorträger verlötet sein. Alternativ oder aber auch zusätzlich, kann das Umlenkkörperorgan auf einem der beiden Halbleiter-IC's aufgelötet oder aufgeklebt sein.

In einem besonders vorteilhaften Ausführungsbeispiel, weist das Umlenkkörperorgan eine Dicke auf, die der Dicke des Sensorträgers entspricht. Hierdurch kann eine besonders einfache und sichere Herstellung des Sensorträgers bzw. Leiterplatte mit den Halbleiter-IC's gewährleistet werden. Das Umlenkkörperorgan kann jedoch in vorteilhafter Weise eine Dicke von ca. 1 mm bis 2 mm, vorzugsweise 1,6 mm, aufweisen.

Die Aufgabe wird ebenfalls gelöst durch eine Erfassungsanordnung mit einer derartigen Sensoranordnung, wobei eine Erregeranordnung vorgesehen ist, die einen Magnetträger aufweist, auf dem mindestens ein Permanentmagnet vorgesehen ist, derart, dass auf der zum Sensorträger gerichteten Seite des mindestens einen Permanentmagneten eine Nordpolfläche und eine Südpolfläche vorgesehen ist.

Darüber hinaus wird die Aufgabe durch ein Drehwinkelmesssystem mit einer derartigen Erfassungsanordnung gelöst, wobei der Magnetträger auf einer Antriebswelle vorgesehen ist, derart, dass der Magnetträger durch die Antriebswelle in Bezug auf den Sensorträger rotatorisch antreibbar ist.

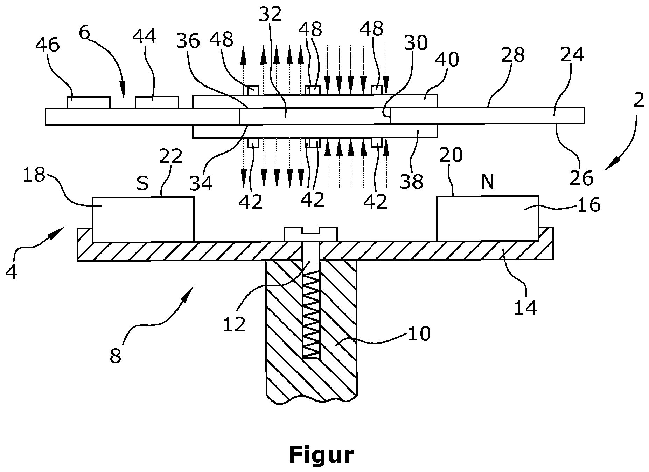

Die Erfindung wird anhand einer Zeichnung näher erläutert. Hierbei zeigt die einzige Figur eine schematische Darstellung eines Drehwinkelmesssystems.

Die einzige Figur zeigt in einer schematischen Ansicht ein erfindungsgemäßes Drehwinkelmesssystem 2, das im Wesentlichen eine Erfassungsanordnung 4 mit einer Sensoranordnung 6 und einer Erregeranordnung 8 aufweist. Das Drehwinkelmesssystem 2 soll hierbei auf bekannte Weise die Drehwinkelposition einer Antriebswelle 10 erfassen. Die Antriebswelle 10 ist hierbei über ein als Schraube ausgebildetes Befestigungsmittel 12 drehfest mit einem Magnetträger 14 der Erregeranordnung 8 verbunden. Auf dem Magnetträger 14 sind zwei Permanentmagneten 16, 18 angeordnet, wobei der Permanentmagnet 16 eine Nordpolfläche 20 und der Permanentmagnet 18 eine Südpolfläche 22 aufweist. Es ist jedoch auch denkbar, dass lediglich ein Permanentmagnet vorgesehen ist, der entsprechend Nordpol und Südpol 20, 22 aufweist. Die Nordpolfläche 20 des Permanentmagneten 16 und Südpolfläche 22 des Permanentmagneten 18, sind zu einem Sensorträger 24 der Sensoranordnung 6 gerichtet.

Der Sensorträger 24 ist im vorliegenden Ausführungsbeispiel als Leiterplatte ausgebildet und weist eine zum Magnetträger 14 gerichtete erste Sensorträgerflachseite 26 und eine von diesem abgewandte, zweite Sensorträgerflachseite 28 auf. In einer Aussparung 30 der Leiterplatte 24 ist ein Umlenkkörperorgan 32 eingeklebt. Dieses Umlenkkörperorgan 32 weist eine zum Magnetträger 14 gerichtete erste Umlenkkörperflachseite 34 und eine von dieser abgewandten, zweite Umlenkkörperflachseite 36 auf. Bei einer sich drehenden Antriebswelle 10, bewegt sich der Magnetträger 14 rotatorisch in Bezug auf den stillstehenden Sensorträger 24. Magnetfeldlinien, eines durch die Permanentmagneten 16, 18 erzeugten Magnetfeldes, sind im Bereich des Umlenkkörperorgans 32 exemplarisch durch Pfeile dargestellt. Diese Magnetfeldlinien verlaufen durch die Wirkung des Umlenkkörperorgans 32 im Wesentlichen senkrecht zu den Umlenkkörperflachseiten 34, 36 und sind auf diese Weise durch Halbleiter-IC's 38, 40 zu erfassen.

Der erste Halbleiter-IC 38 ist hierbei auf der ersten Sensorträgerflachseite 26 und der ersten Umlenkkörperflachseite 34 vorgesehen und damit zum Magnetträger gerichtet. Dieser Halbleiter-IC 38 besitzt im vorliegenden Ausführungsbeispiel 4 als Hallelemente ausgeführte Sensorelemente 42 und ist signaltechnisch über einen Analog-/Digital-Konverter 44 mit einem Mikrocontroller 46 verbunden. Mithilfe des Mikrocontrollers 46, ist auf bekannte Weise eine Ermittlung des Feinpositionswertes der Winkelstellung der Antriebswelle 10 möglich.

Erfindungsgemäß ist nun vorgesehen, dass auf der zweiten Sensorträgerflachseite 28 und der zweiten Umlenkkörperflachseite 36 ein zweiter Halbleiter-IC 40 mit ebenfalls vier als Hallelemente ausgeführte Sensorelemente 48 angeordnet ist. Dieser zweite Halbleiter-IC 40 weist eine interne Signalverarbeitung auf und gibt direkt Positionswerte der Antriebswelle 10 aus, die nicht genau sind, aber zur Überprüfung des korrekten Betriebes des ersten Halbleiter-IC's 38 dienen. Auf diese Weise ist eine einfache Überprüfung des ersten Halbleiter-IC's 38 möglich und kann hohen sicherheitstechnischen Anforderungen an eine derartige Sensoranordnung 6 bzw. an ein Drehwinkelmesssystem 2 entsprochen werden.

Das Umlenkkörperorgan 32 ist im vorliegenden Ausführungsbeispiel aus einem weichmagnetischen Metall, insbesondere einer Nickel-Eisen-Legierung hergestellt. Das Umlenkkörperorgan 32 weist darüber hinaus im vorliegenden Ausführungsbeispiel eine Dicke von 1,6 mm auf, die der Dicke der Leiterplatte 24 entspricht. Es ist auf dem ersten Halbleiter-IC 38 verlötet, wobei in einem nachfolgenden Montageschritt beide Halbleiter-IC's 38, 40 auf der Leiterplatte 24 verlötet wurden.

Es sollte deutlich sein, dass insbesondere hinsichtlich der Abmessungen und der Befestigungsmöglichkeiten viele verschiedene Ausführungsformen der Erfindung möglich sind.

## Patentansprüche

1. Sensoranordnung zur Erfassung von Magnetfeldlinien eines Magnetfeldes mit einem Sensorträger (24) mit einer ersten und einer zweiten Sensorträgerflachseite (26, 28), der zumindest ein Umlenkkörperorgan (32) für die Magnetfeldlinien und einen ersten Halbleiter-IC (38) mit Sensorelementen (42) aufweist, wobei das Umlenkkörperorgan (32) eine erste und eine zweite Umlenkkörperflachseite (34, 36) aufweist, wobei der erste Halbleiter-IC (38) an der ersten Umlenkkörperflachseite (34) vorgesehen ist, **dadurch gekennzeichnet, dass** an der zweiten Umlenkkörperflachseite (36) ein zweiter Halbleiter-IC (40) mit Sensorelementen (48) vorgesehen ist.

2. Sensoranordnung nach Anspruch 1, **dadurch gekennzeichnet, dass** die Sensorelemente (42, 48) als Hallelemente ausgeführt sind.

3. Sensoranordnung nach Anspruch 2, **dadurch gekennzeichnet, dass** der erste Halbleiter-IC (38) und/oder zweite Halbleiter-IC (40) mindestens zwei Hallelemente (42, 48), vorzugsweise vier Hallelemente, aufweist.

4. Sensoranordnung nach einem der Ansprüche 1 - 3, **dadurch gekennzeichnet, dass** der Sensorträger (24) als Leiterplatte mit elektronischen Bauteilen (44, 46), wie zum Beispiel einem Mikrokontroller (46), ausgeführt ist.

5. Sensoranordnung nach Anspruch 4, **dadurch gekennzeichnet, dass** mindestens der erste Halbleiter-IC (38) mit dem Mikrokontroller (46) signaltechnisch verbunden ist.

6. Sensoranordnung nach einem der vorhergehenden Ansprüche, **dadurch gekennzeichnet, dass** der zweite Halbleiter-IC (40) eine interne Signalverarbeitung aufweist.

7. Sensoranordnung nach einem der vorhergehenden Ansprüche, **dadurch gekennzeichnet, dass** das Umlenkkörperorgan (32) aus einem ferro- bzw. weichmagnetischen Metall, vorzugweise einer Nickel-Eisen-Legierung, hergestellt ist.

8. Sensoranordnung nach einem der vorhergehenden Ansprüche, **dadurch gekennzeichnet, dass** das Umlenkkörperorgan (32) in den Sensorträger (24) eingeklebt ist.

9. Sensoranordnung nach einem der vorhergehenden Ansprüche, **dadurch gekennzeichnet, dass** der erste und/oder der zweite Halbleiter-IC (38, 40) an dem Sensorträger (24) verlötet sind.

10. Sensoranordnung nach einem der vorhergehenden Ansprüche, **dadurch gekennzeichnet, dass** das Umlenkkörperorgan (32) auf einem der beiden Halbleiter-IC's (38, 40) aufgelötet oder aufgeklebt ist.

11. Sensoranordnung nach einem der vorhergehenden Ansprüche, **dadurch gekennzeichnet, dass** das Umlenkkörperorgan (32) eine Dicke aufweist, die der Dicke des Sensorträgers (24) entspricht.

12. Sensoranordnung nach einem der vorhergehenden Ansprüche, **dadurch gekennzeichnet, dass** das Umlenkkörperorgan (32) eine Dicke von ca. 1 mm bis 2 mm, vorzugsweise 1,6 mm, aufweist.

13. Erfassungsanordnung mit einer Sensoranordnung (6) nach einem der vorhergehenden Ansprüche, **dadurch gekennzeichnet, dass** eine Erregeranordnung (8) vorgesehen ist, die einen Magnetträger (14) aufweist, auf dem mindestens ein Permanentmagnet (16, 18) vorgesehen ist, derart, dass an der zum Sensorträger (24) gerichteten Seite des mindestens einen Permanentmagneten (16, 18) eine Nordpolfläche (20) und eine Südpolfläche (22) vorgesehen ist.

14. Drehwinkelmesssystem mit einer Erfassungsanordnung (4) nach Anspruch 13, **dadurch gekennzeichnet, dass** der Magnetträger (14) auf einer Antriebswelle (10) vorgesehen ist, derart, dass der Magnetträger (14) durch die Antriebswelle (10) in Bezug auf den Sensorträger (24) rotatorisch antreibbar ist.
